Europäisches Patentamt

European Patent Office

Office européen des brevets

(19)

(11) Publication number: **0 195 535**
**A2**

(12) # EUROPEAN PATENT APPLICATION

(21) Application number: **86301312.4**

(22) Date of filing: **24.02.86**

(51) Int. Cl.⁴: **G 11 B 17/04**
**G 11 B 23/033**

(30) Priority: **05.03.85 JP 43346/85**

(43) Date of publication of application:
**24.09.86 Bulletin 86/39**

(84) Designated Contracting States:
**DE FR GB**

(71) Applicant: **TOKYO ELECTRIC CO., LTD.**
**6-13, 2-chome, Nakameguro**
**Meguro-ku Tokyo(JP)**

(72) Inventor: **Murakami, Keisuke**
**651-3 Shuzenji Shuzenji-cho**
**Tagata Shizuoka(JP)**

(72) Inventor: **Kawahira, Masayoshi**
**1419-22 Sakuragaoka**
**Yata, Mishima Shizuoka(JP)**

(72) Inventor: **Aoki, Chihiro**
**756-12 Takyo Ohhito-cho**
**Tagata Shizuoka(JP)**

(74) Representative: **Evans, David Charles et al,**
**F.J. CLEVELAND & COMPANY 40-43, Chancery Lane**
**London, WC2A 1JQ(GB)**

(54) **Shutter opening and closing device for a disk cassette.**

(57) A shutter opening and closing device for a disk cassette according to the invention comprises a cassette support having a pawl formed in an integral relationship thereon for pressing an engaging body of a disk cassette to open and then slide a shutter as the disk cassette is inserted into the cassette support. A shutter closing member made of an elastic body is disposed with one side of the cassette support for engagement with an engaging hole of the shutter at an instant when the shutter is slid.

EP 0 195 535 A2

## SHUTTER OPENING AND CLOSING DEVICE FOR A DISK CASSETTE

### DESCRIPTION

This invention relates to a magnetic recording and reproducing apparatus for magnetically recording on and reproducing from a disk cassette including a hard case in which a magnetic disk is accommodated, and more particularly to a shutter opening and closing device for a disk cassette for opening and closing a shutter of a disk cassette loaded in a magnetic recording and reproducing apparatus.

In particular this invention is concerned with the opening and closing of a shutter of a disc cassette having a flat hard case (103) for containing a magnetic disk (102) therein, a shutter (112) mounted for sliding movement between open and closed positions on one side of said hard case and having an engaging hole (111) opposed to one side edge of said hard case, and a locking member (108) mounted for movement between a locking position in which it locks the shutter in a closed position when it projects from

- 2 -

said shutter and a free position in which it is retracted and the shutter is movable to the open position. Such a cassette will be referred to hereinafter as "a cassette of the kind described".

According to the present invention there is provided a shutter control device for a disc cassette (100) of the kind described characterised in that said device comprises:-

(i)     a cassette support (13) defining a cassette receiving space or cavity for holding a cassette (100) with said shutter (112) in an open position,

(ii)    pawl means (30) carried by said support for engagement with said locking member (108) and said shutter (112) and to move each to the free and open positions respectively,

(iii)   a resilient shutter closing member (23) having at an extremity thereof a "ride over" portion (28) and a detent portion (27) which latter is adapted to engage said shutter (112),

the arrangement being such that an inserting cassette (100) into said support (13) by progressively sliding it thereinto, the "ride over" portion (28) of closing member (23) causes the detent portion (27) to ride over locking member (108) of shutter (112) and to bring pawl means (30) into engagement with locking member (108) and move the latter to the free position and into abutment with an edge of the shutter (112) while the detent portion (28) of closing member (23) engages cooperating means (111) on shutter (112) whereby continued insertional movement of the cassette (100) causes movement of the shutter (112) to the open position.

Thus the present invention seeks to provide a shutter opening and closing device for a disk cassette which can be assembled and adjusted with ease.

Furthermore the number of component parts and of assembly steps can be reduced.

In one aspect of the invention, there is provided a shutter opening and closing device for a disk cassette comprising a cassette support for removably holding a disk cassette therein, the cassette support having a pawl formed in an integral relationship on one side of the cassette support for retracting an engaging body inwardly when the disk cassette is inserted and for then interfering with a shutter to open the shutter, and a shutter closing member made of an elastic body and mounted on the one side of the cassette support for resilient engagement with a side face of a disk cassette, the shutter closing member having an extension formed by bending the same so as to extend obliquely outwardly, the extension of the shutter closing member interfering with an end portion of the shutter to retract the shutter closing member from the engaging body in an initial stage of an operation to insert the disk cassette into the cassette support, the shutter closing member further having a protrusion formed by bending the same, the protrusion of the shutter closing member being resiliently engaged with an engaging hole of the shutter when the disk cassette is inserted to a predetermined depth into the cassette support.

Accordingly, when the disk cassette begins to be inserted into the cassette support, the shutter closing member engages the extension thereof with the shutter and is deflected outwardly of the engaging body thereby while the protrusion thereof is also retracted from the engaging body. As the disk cassette is further inserted to the predetermined depth, the pawl of the cassette support retracts the

- 5 -

engaging body or locking member inwardly in a free position, thus freeing the shutter for movement and then slides the shutter to the open position. In this instance, the detent of the shutter closing member is in engagement with the engaging hole. When the disk cassette is to be drawn out of the cassette support, the shutter is closed by the protrustion of the shutter closing member which is in engagement with the engaging hole of the shutter.

Meanwhile, since opening and closing of the shutter are shared between the pawl of the cassette support and the shutter closing member, it is not necessary to strictly determine relations between the pawl and the shutter closing member and between them and a disk cassette, resulting in facilitation of assembly and adjustment. Further, formation of the shutter closing member from and elastic member contributes to the ease of assembly and adjustment.

In addition, since the shutter closing member has the protrustion and the extension formed into an integral body by bending the same, the number of parts and the man hours required for assembly is much reduced.

Following is a description by way of example only and with reference to the accompanying drawings of methods of carrying the invention into effect.

In the drawings:-

Figure 1 is a perspective view of a cassette support and a disk cassette, as viewed from the back, illustrating an embodiment of the present invention.

Figure 2 is a perspective view, in a reduced scale, illustrating an entire construction of a magnetic recording and reproducing apparatus.

Figure 3 is an enlarged plan view, partly in section, illustrating the disk cassette at an initial stage during insertion.

Figure 4 is a similar view illustrating the disk cassette at a middle stage during insertion.

Figure 5 is a a similar view illustrating the disk cassette at a later middle stage during insertion.

Figure 6 is a similar view illustrating the disk cassette at a final station during insertion.

Figure 7 is a perspective view illustrating a conventional disk cassette; and

Figure 8 is a perspective view illustrating an opening and closing structure for a shutter of a disk cassette.

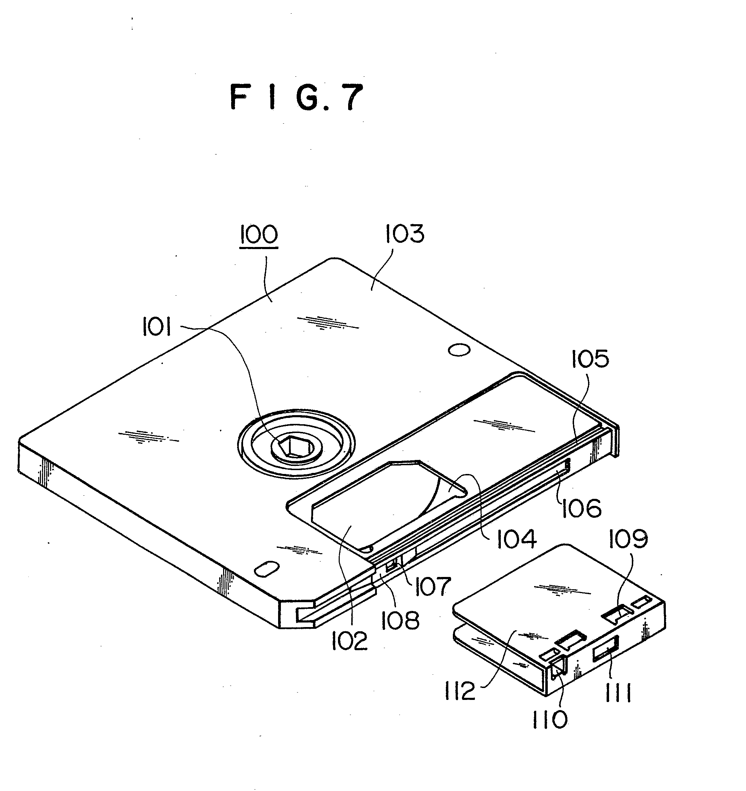

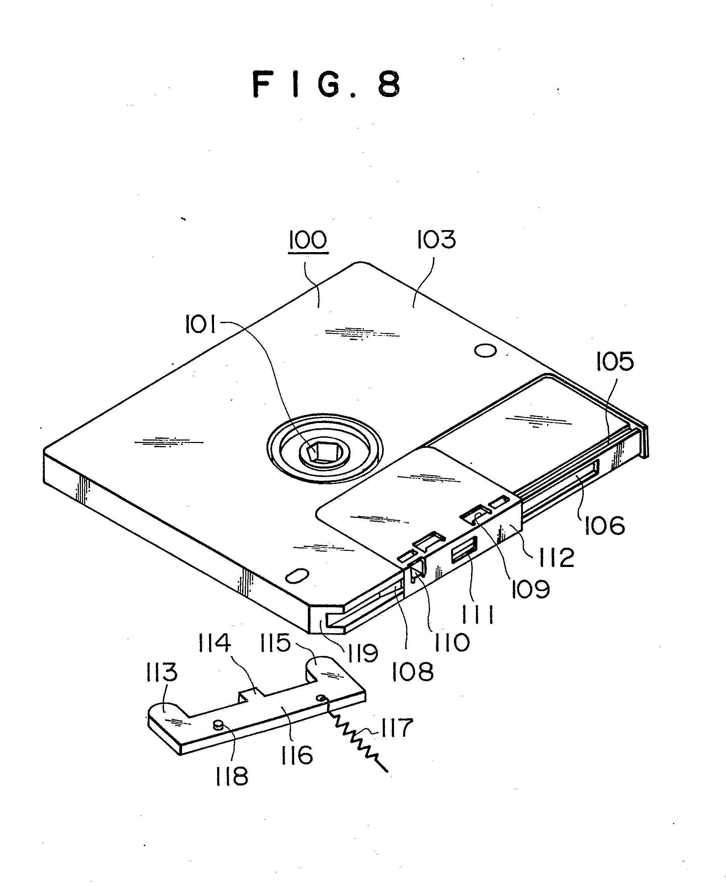

Turning first to Figure 7 and 8 of the drawings these show a typical cassette disc for use in the present invention.

A disk cassette generally designated by 100 includes a magnetic disk 102 which is accommodated in a flat hard case 103 and has at the centre thereof a hub 101 adapted to be connected to a disk driving shaft not shown. The hard case 103 has a mounting window 104 formed therein to allow part of the magnetic disk 102 to be exposed therefrom and two grooves 105 and 106 formed on a side face thereof adjacent the mounting window 104. An engaging body 108 is mounted for resilient movement into and out of the groove 106 and has a recess 107 formed therein. A shutter 112 is mounted for sliding movement on one side of the hard case 103 and has a projection 109 adapted to engage with and be slidable along the other groove 105 and an engaging piece 110 adapted to engage with the recess 107 of the engaging body 108. The shutter 112 is so shaped that in an open position thereof it can completely expose the mounting window 104 of the hard case 103 but in close position it can completely obturate window 104.

Such a cassette is employed in conjunction with opening and closing means on a cooperating cassette receiving device. Such a device includes a lever 116 having three projections 113, 114 and 115. The lever 116 is supported for pivotal motion around a shaft 118 and is urged in a clockwise direction by a spring 117. If the disk cassette 100 is inserted into a cassette support (not shown), at first the projection 113 is abutted with an end portion 119 of the disk cassette 100 so that the lever 116 is pivoted thereby against a force of the spring 117. As a result, the engaging body 108 is pushed to move to a position free of the engaging piece 110 by the projection 114 while the projection 114 interferes with the shutter 112 so that the shutter 112 is slidably moved to open the reading window 104. On the other hand, if the disk cassette 100 is drawn out of the cassette support, the shutter 112 is closed by the projection 115 since the projection 115 remains in engagement with the engaging hole 111 of the shutter 112.

This construction suffers from the disadvantage that the shutter 112 is opened and closed by means of the single lever 116, and thus the positions of the projections 113, 114 and 115 relative to the disk cassette 100 must be accurately adjusted. Accordingly, the cassette cannot be produced easily.

Besides, production of the cassette includes a number of steps such as supporting of the shaft 118, temporary fixing of the lever 116 to the shaft 118, securing of the spring 117, and so on. In addition, it requires a number of parts and is complicated in structure. As a result, the component cost and production cost both become expensive.

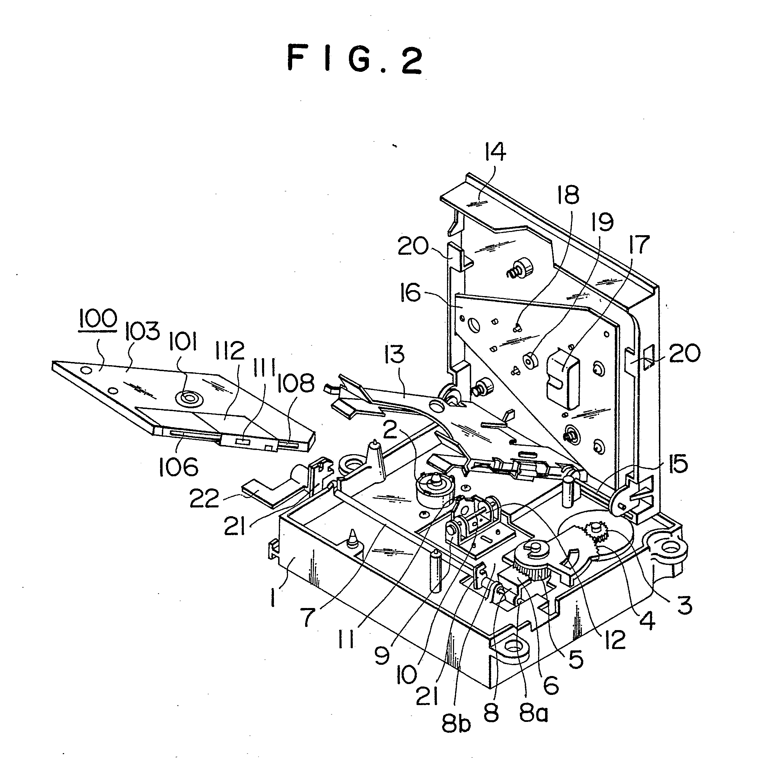

The present invention will now be described in detail in connection with a preferred embodiment illustrated in Figures 1 to 6 of the accompanying drawings. A disk cassette generally designated at 100 has the similar structure to that as described above in connection with Figures 7 and 8 and like parts thereof are designated by like reference numerals and hence description of the same is omitted herein. A disk driving shaft 2 is mounted on a base 1 and is directly connected to a stepping motor (not shown). A gear 3 is mounted at a portion adjacent a side of the base 1 and is directly connected to another stepping motor (not shown). A sector gear 4 is mounted adjacent and in meshed engagement with the gear 3. Another gear 5 is mounted for rotation in integral relationship with the sector gear 4 and is engaged with a rack 6 formed on a portion of a carrier 8 which is mounted for movement on a carrier shaft 8a extending in parallel with a clamp shaft 8. A head mounting plate 9 is mounted on the carrier 8 by means of a connecting plate 8b, and an adjusting screw 10 is mounted for rotation on the head mounting plate 9 but is held from movement in an axial direction thereof. A head base 12 is in threaded engagement with the adjusting screw 10 and has a magnetic head 11 supported thereon.

A cassette support 13 and a cover 14 are mounted for pivotal motion on the base 1 by means of a pivot shaft 15. A plate 16 is mounted for displacement on the cover 14 and is urged in a direction toward the base 1. The plate 16 has mounted thereon a controlling member 17 for controlling a setting face of a magnetic disk 102, and a pressing member 18 for resiliently pressing against the magnetic disk 102. The plate 16 further has an index sensor 19 mounted thereon. A pair of clamps 21 are secured at opposite ends of the clamp shaft 7 and adapted to engage with a pair of tongues 20 formed on the cover 14. An operating lever 22 is formed in integral relationship on one of the clamps 21.

A shutter closing member 23 constituted from a wire is mounted on the cassette support 13. The shutter closing member 23 has a leg 24 formed to extend at a right angle from an end thereof and received in a mounting hole 25 formed as a holding means in the cassette support 13. The shutter closing member 23 is angularly bent at an intermediate portion 26 thereof which extends laterally outwardly therefrom. The shutter closing member 23 has a protrusion 27 formed at an opposite end portion thereof and adapted to resiliently engage with an engaging hole 111 of a shutter 112 of the disk cassette 100. The shutter closing member 23 further has an extension 28 which extends obliquely outwardly from the protrustion 27 thereof. A pressing member 29 is mounted on the cassette support 13 and resiliently presses against the bent portion 26 of the shutter closing member 23 inwardly to apply an initial tension to the shutter closing member 23. A pawl 30 is formed in integrally bent relationship on the cassette support 13 and is operable to inwardly retract an engaging member 108 of the disk cassette 100 and to interfere with an end portion of the shutter 112.

With such a construction as described above, normally the engaging member 108 of the disk cassette 100 resiliently extends outwardly to engage with an engaging piece 110 of the shutter 112 to prevent movement of the shutter 112 in an opening direction.

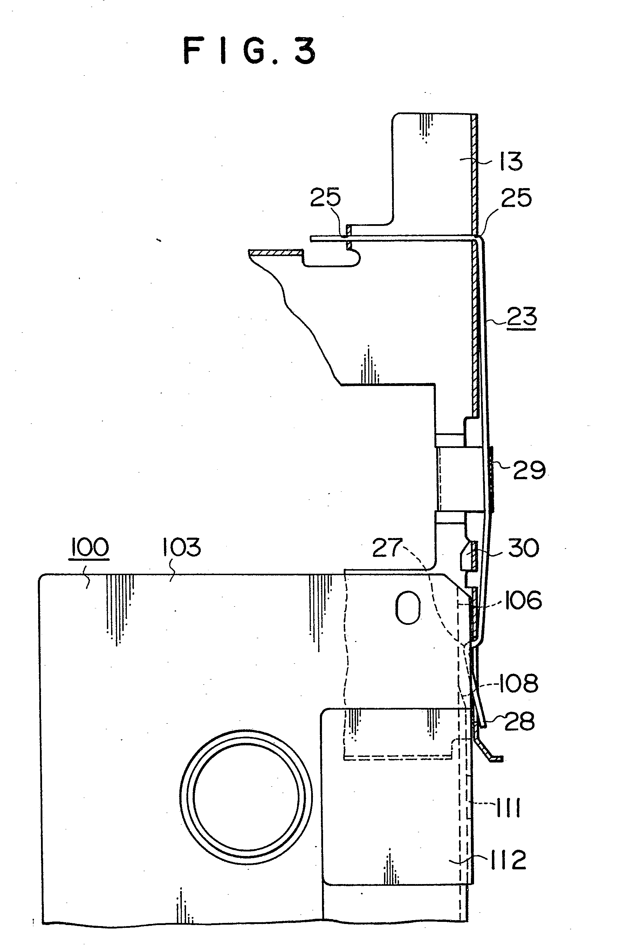

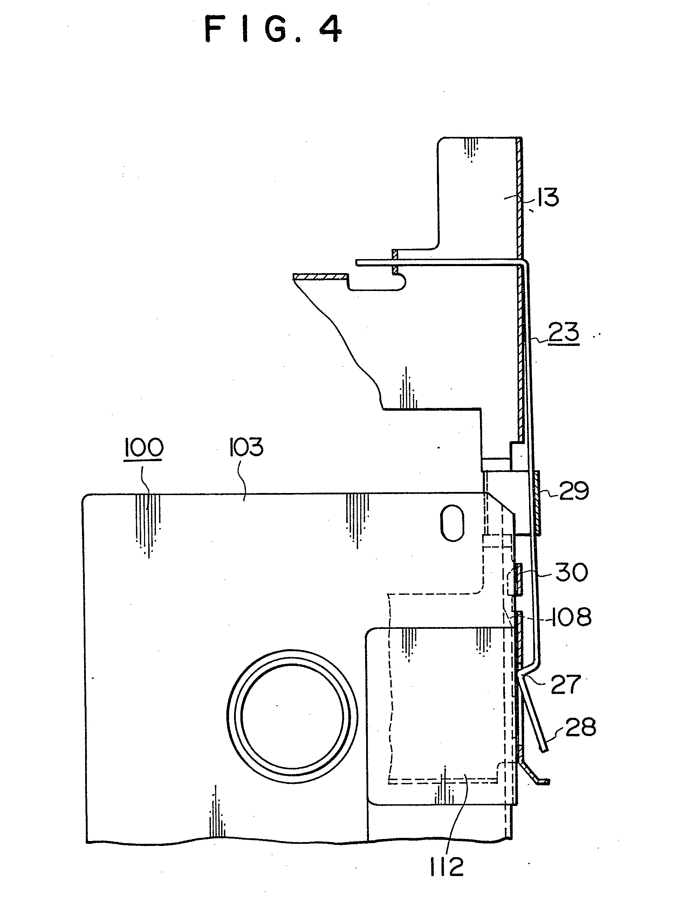

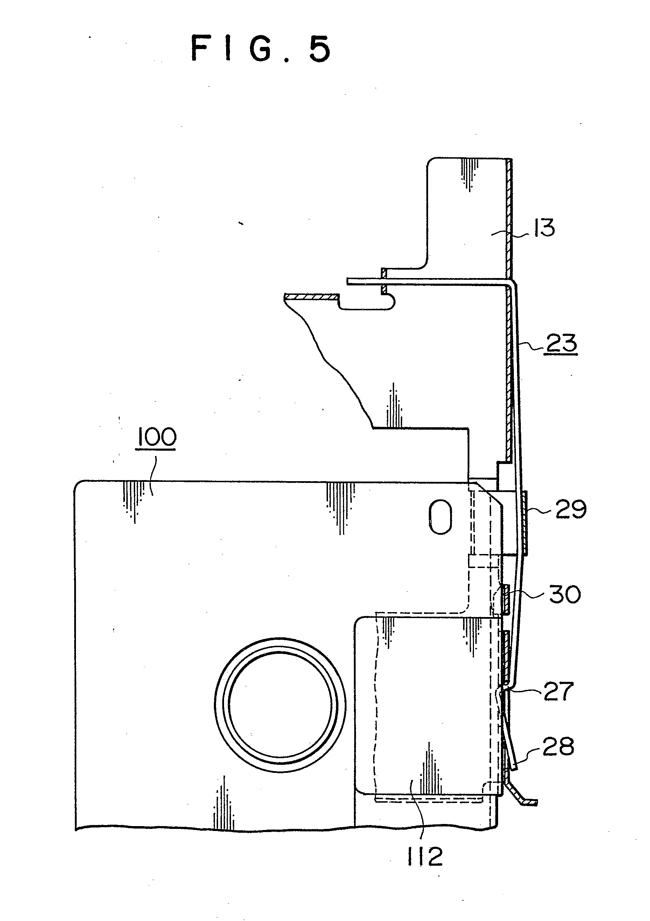

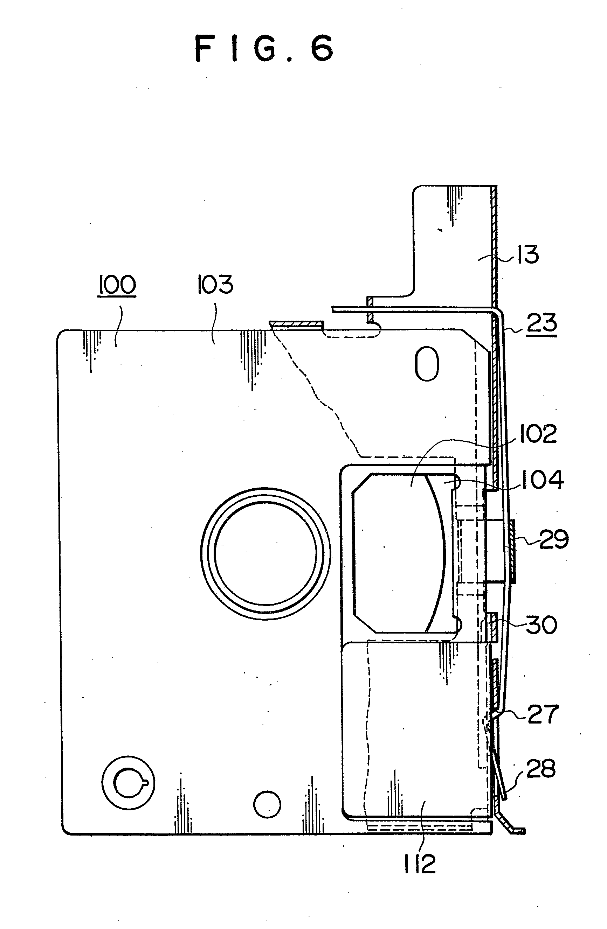

For recording or reproduction of data, the cover 14 is opened and the disk cassette 100 is inserted into the cassette support 13. At an initial stage during insertion of the disk cassette 100, the protrusion 27 of the shutter closing member 23 to which an initial tension is applied by the pressing member 29 is admitted into a groove 106 of the disk cassette 100 as shown in Figure 3. As the disk cassette 100 is

- 13 -

inserted further as seen in Figure 4, the outwardly inclined extension 28 of the shutter closing member 23 interferes with an end of the shutter 112. As a rsult, the shutter closing member 23 is yieldingly flexed outwardly to retract the protrusion 27 thereof from the engaging member 108. Accordingly, the shutter 112 will never begin to open too early, and hence the magnetic disk 102 is protected by the shutter 112. As the disk cassette 100 is further inserted to a predetermined depth as shown in Figure 5, the pawl 30 of the cassette support 13 pushes the engaging member 108 to its inwardly retracted position and interferes with the end portion of the shutter 112 while the protrusion 27 of the shutter closing member 23 is also engaged with the engaging hole 111 of the shutter 112. Accordingly, as seen in Figure 6, the shutter 112 is opened by the pawl 30 during a process of further insertion of the disk cassette 100 to its deepest limit position.

On the other hand, when the disk cassette 100 is to be drawn out, the pawl 30 does not provide a force to close the shutter 112. However, since the protrustion 27 of the shutter closing member 23 is in engagement with the engaging hole 111 of shutter 112, the shutter 112 can be closed assuredly by a drawing operation of the disk cassette 100.

However, opening and closing of the shutter 112 is shared by the pawl 30 of the cassette support 13 and the shutter closing member 23. Accordingly it is not necessary to strictly determine a relation between the pawl 30 and the shutter closing member 23 and a relation of them to the pawl 30, resulting in facilitation of assembly and adjustment of the device. Further, since the shutter closing member is formed from an elastic member, there is a high allowability to an error of a dimension when comparing with an alternate arrangement which is formed from a solid substance, which also contributes to facilitation of assembly and adjustment.

In addition, opening and closing operations of the shutter 112 is assured by the shutter closing member 23 formed from a single wire, resulting in reduction of the number of components and also of the number of man hour for assembly. Accordingly, a component cost and a production cost can both be reduced.

CLAIMS

1.    A shutter control device for a disc cassette
(100) of the kind described characterised in that said
device comprises:-

(i)     a cassette support (13) defining a cassette
        receiving space or cavity for holding a cassette
        (100) with said shutter (112) in an open
        position,

(ii)    pawl means (30) carried by said support for
        engagement with said locking member (108) and
        said shutter (112) and to move each to the free
        and open positions respectively,

(iii)   a resilient shutter closing member (23) having
        at an extremity thereof a "ride over" portion
        (28) and a detent portion (27) which latter is
        adapted to engage said shutter (112),

the arrangement being such that an inserting cassette
(100) into said support (13) by progressively sliding
it thereinto, the "ride over" portion (28) of closing
member (23) causes the detent portion (27) to ride
over locking member (108) of shutter (112) and to
bring pawl means (30) into engagement with locking
member (108) and move the latter to the free position and into abutment with an edge of the shutter (112) while the detent portion (28) of closing member (23) engages cooperating means (111) on shutter (112) whereby continued insertional movement of the cassette (100) causes movement of the shutter (112) to the open position.

2. A device as claimed in claim 1 characterised in that said shutter closing member (23) is a resilient elongate member configure such that the detent portion is resiliently biased toward the cassette cavity of said support.

3. A device as claimed in claim 1 or claim 2 characterised in that said shutter closing member (23) is mounted on one side of said cassette support for resilient engagement with a side face of said cassette and its shutter, said closing member comprising a detent portion (27) adapted to contact said locking member (108) and to ride over the same whereby continued insertional movement of the cassette into the support causes the "ride over" portion (28) to ride over the external surface of the shutter (112) so that when said pawl means (30) abuts said shutter edge, the detent engages an engaging hole (111) on said shutter for closing said shutter and moving the locking member (108) to the locking position on removal of the cassette (100) from said support (13).

4. A device as claimed in any preceding claim characterised in that said closing member (23) comprises a wire.

5. A device as claimed in any preceding claim characterised in that said closing member has a leg (26, 27, 28) formed towards an extremity thereof which is bent (at 27) to form said detent portion (27), the outer extremity of which forms said "ride over" portion 28 and in that said support (13) is configured with a juxtaposed recess to receive said detent portion (27) which is biased into the cassette cavity thereof.

6. A device as claimed in any preceding claim characterised in that said cassette support (13) has a pressing member (29) juxtaposed a side of said cassette support for urging said shutter closing member (23) inwardly towards the cassette cavity.

7.    A device as claimed in claim 6 characterised in that said pressing member (29) is resiliently mounted on said cassette support (13).

# F I G. 2

# FIG. 3

# F I G. 4

# FIG. 5

# FIG. 6

# F I G. 7

# FIG. 8